# EUROPEAN PATENT APPLICATION

(11) **EP 2 644 479 A2**
(43) Date of publication of application: **02.10.2013**
(21) Application number: 12002930.1
(22) Date of filing: 26.04.2012
(51) Int. Cl.: B62D 27/02, B62D 29/00

(54) **Chassis frame connection for an electrical vehicle for disabled person**

(30) Priority: 26.03.2012 KR 20120030538
(71) Applicant: Duckwonent Co., Ltd., Gwahaksandan 1-ro Gangseo-gu, Busan (KR)
(72) Inventor: Jung, Jin, Hong, Hwaseong-si Gyeonggi-do (KR)
(74) Representative: Lusuardi, Werther

(57) **Abstract**

The present invention relates to a chassis frame assembly structure for an electrical vehicle, wherein welding assembly units are formed by attachment and welding at respective portions in each of which channel-shaped frames 10 made of aluminum and each configured to have a hollow structure are coupled. The chassis frame assembly structure includes a plurality of fastening holes formed at proper interval close to the welding assembly unit of the chassis frames 10; reinforcement members 30 each configured to have a channel shape, surround the periphery of the welding assembly unit of the chassis frame 10, and have a plurality of assembly holes 31, corresponding to the respective fastening holes 11, formed at proper intervals in one face of the reinforcement member 30; and fastening members 40 assembled with the assembly holes 31 and the fastening holes 11, wherein the reinforcement member 30 is positioned at the outside of the chassis frame 10 and then integrally assembled with the chassis frame 10 by the fastening members 40.

## Description

### CROSS-REFERENCE TO RELATED APPLICATION

This application is based on and claims priority from Korean Patent Application No. 10-2012-0030538 filed on March 26, 2012 in the Korean Intellectual Property Office, the disclosure of which is incorporated herein in its entirety by reference.

### BACKGROUND OF THE INVENTION

### Field of the Invention

The present invention relates to a chassis frame for an electrical vehicle for a disabled person and, more particularly, to a chassis frame assembly structure for an electrical vehicle, wherein the welding part of the chassis frame made of aluminum (Al) is fixed more firmly by reinforcement so that an impact distribution at the time of a collision is uniformly distributed, thereby being capable of preventing casualties by preventing a crack from occurring in the welding part.

### Background of the Related Art

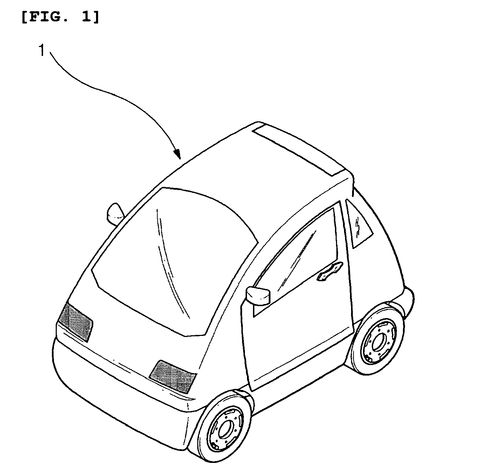

The recent electrical vehicle for a disabled person includes a single seater electrical vehicle as shown in FIG. 1.

The electrical vehicle 1 for a disabled person is driven using a battery method without using fuel as in a common vehicle. Accordingly, there is a tendency to reduce the weight of the electrical vehicle in order to increase the distance covered at the time of fabrication.

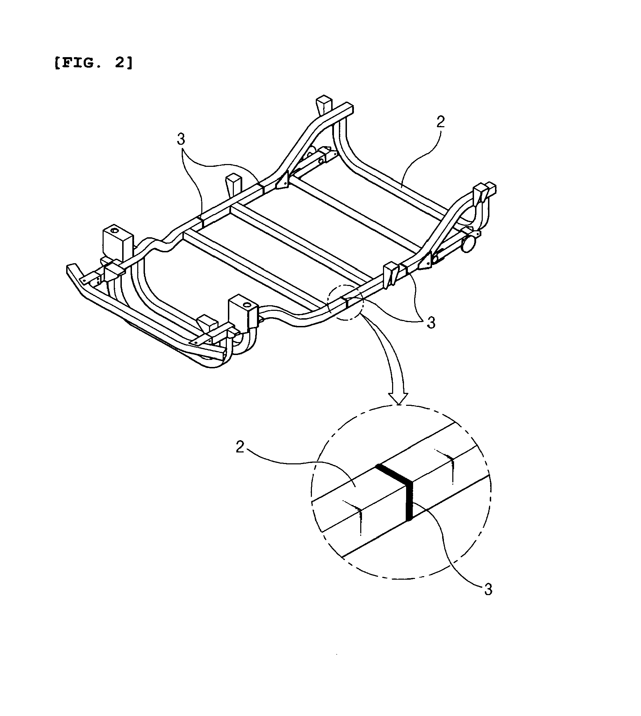

To this end, since the chassis frames 2 of the electrical vehicle are made of an aluminum (Al) alloy as shown in FIG. 2, the connection parts of the chassis frames 2 are welded using an argon or arc welding method, and thus the chassis frames 2 are integrally assembled while forming a welding assembly unit 3.

The weight of the electrical vehicle 1 for a disabled person can be reduced because the chassis of the electrical vehicle 1 for a disabled person 1 are assembled by welding using the frames 2 made of aluminum (Al) as described above. Accordingly, the consumption of the battery can be reduced and the distance covered can be increased because the weight of the electrical vehicle for a disabled person is reduced.

If the aluminum chassis frames 2 of the conventional electrical vehicle for a disabled person are assembled using a welding method as described above, however, several problems are generated.

That is, when the aluminum chassis frames 2 are used, the weight of the electrical vehicle 1 may be reduced to some extent, but the aluminum chassis frame 2 has relatively weak impact strength. For this reason, if the electrical vehicle is subject to a frontal collision while driving and the impact load is applied to the welding parts, a crack is generated in the welding assembly unit 3 and thus the welding part is easily deformed. In an even worse situation, the aluminum chassis frames 2 are broken and the broken parts invade the interior of the vehicle, thereby severely injuring a passenger.

Accordingly, the conventional aluminum chassis frame 2 is problematic in that, when the vehicle collides, the vehicle body may be greatly damaged because the aluminum chassis frame 2 has low stiffness against an impact and the reliability and safety of a product are deteriorated because the safety of a passenger and a driver cannot be guaranteed. Accordingly, there is a need for a method of improving the chassis frame assembly structure.

### SUMMARY OF THE INVENTION

The present invention relates to a chassis frame assembly structure for an electrical vehicle for a disabled person, wherein the welding assembly part of the chassis frame made of aluminum (Al) is fixed more firmly by reinforcement so that an impact distribution at the time of a collision is uniformly distributed, thereby being capable of preventing casualties by preventing a crack from occurring in the welding assembly part due to the collision impact and thus preventing the deformation or breakage of the chassis frames.

In accordance with an embodiment of the present invention, there is provided a chassis frame assembly structure for an electrical vehicle for a disabled person, in which welding assembly units are formed by attachment and welding at respective portions in each of which channel-shaped frames made of aluminum and each configured to have a hollow structure are coupled, including a plurality of fastening holes formed at proper interval close to the welding assembly unit of the chassis frames; reinforcement members each configured to have a channel shape, surround the periphery of the welding assembly unit of the chassis frame, and have a plurality of assembly holes, corresponding to the respective fastening holes, formed at proper intervals in one face of the reinforcement member; and fastening members assembled with the assembly holes and the fastening holes, wherein the reinforcement member is positioned at the outside of the chassis frame and integrally assembled with the chassis frame by the fastening members.

In accordance with another embodiment of the present invention, each of the reinforcement members is the square-sectional welding assembly unit of the chassis frame having a straight-line section and formed of a □-shaped sectional channel. The assembly holes are formed in both faces of the reinforcement member.

In accordance with yet another embodiment of the present invention, each of the reinforcement members is the square-sectional welding assembly unit of the chassis frame having a straight-line section and formed of a ⊏-shaped sectional channel. The assembly holes are formed in both faces of the reinforcement member.

In accordance with further yet another embodiment of the present invention, each of the reinforcement members may further include a second welding assembly unit made of the same aluminum (Al) as the chassis frame, and a corner part where the chassis frames and the second welding assembly unit adjoin each other may be welded and processed.

Each of the fastening members includes a fastening bolt and a nut. The fastening bolt penetrates the chassis frame and the reinforcement member, and the fastening bolt may be then assembled by the nut on the opposite side or the fastening hole may be subject to tap processing and screwed using only the fastening bolt.

### BRIEF DESCRIPTION OF THE DRAWINGS

Further objects and advantages of the invention can be more fully understood from the following detailed description taken in conjunction with the accompanying drawings in which:

FIG. 1 is a perspective view showing an external appearance of an electrical vehicle for a disabled person;

FIG. 2 is a perspective view showing the chassis frame assembly structure and the welding assembly unit for a conventional electrical vehicle for a disabled person;

FIG. 3 is a perspective view showing a chassis frame assembly structure for an electrical vehicle for a disabled person according to an embodiment of the present invention;

FIG. 4 is an exploded perspective view showing the assembly structure of a □-shaped channel reinforcement member according to an embodiment of the present invention;

FIGS. 5 and 6 are a longitudinal section view and a front view showing the assembly structure of the □-shaped channel reinforcement member;

FIG. 7 is an exploded perspective view showing the assembly structure of a ⊏-shaped channel reinforcement member according to another embodiment of the present invention;

FIGS. 8 and 9 are a longitudinal section view and a front view showing the assembly structure of the ⊏-shaped channel reinforcement member; and

FIG. 10 is a front view showing a chassis frame assembly structure according to another embodiment of the present invention.

<Description of reference numerals of principal elements in the drawings>

10: chassis frame 11: fastening hole

20: welding assembly unit

21: second welding assembly unit

30: reinforcement member 31: assembly hole

40: fastening member 41: fastening bolt

42: nut

301: □-shaped channel reinforcement member

302: ⊏-shaped channel reinforcement member

### DETAILED DESCRIPTION OF EMBODIMENTS

Hereinafter, some exemplary embodiments of the present invention are described in detail with reference to the accompanying drawings, but the embodiments are described in detail to the extent that those skilled in the art to which the present invention pertains may readily implement the present invention. Accordingly, the technical spirit and category of the present invention are not limited to the embodiments.

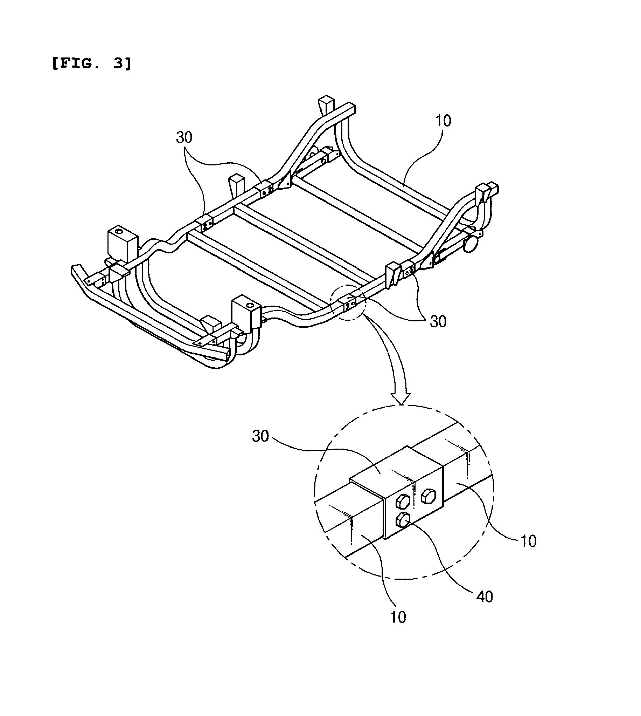

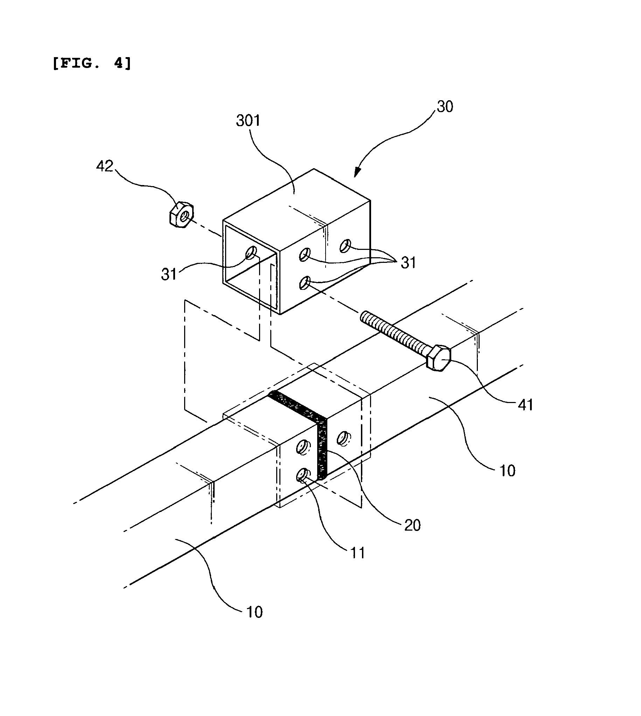

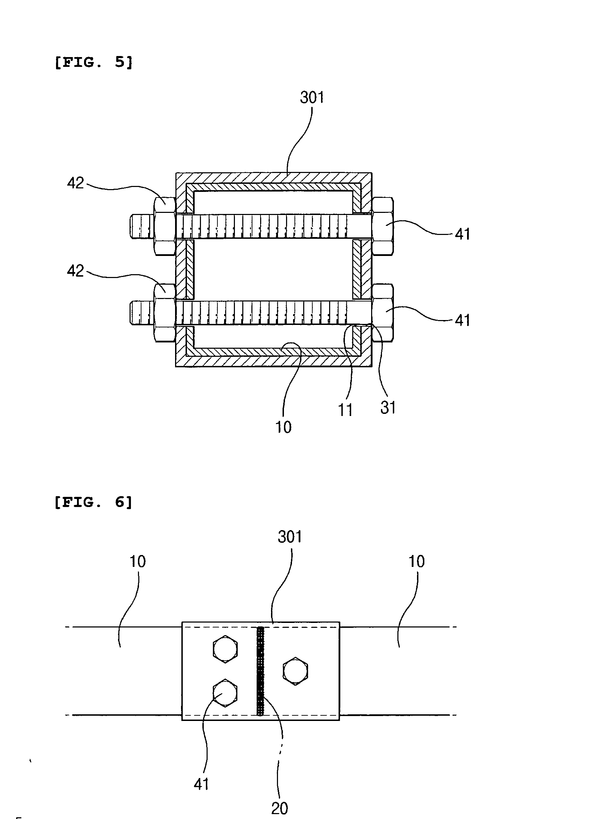

FIG. 3 is a perspective view showing a chassis frame assembly structure for an electrical vehicle for a disabled person according to an embodiment of the present invention, FIG. 4 is an exploded perspective view showing the assembly structure of a □-shaped channel reinforcement member according to an embodiment of the present invention, and FIGS. 5 and 6 are a longitudinal section view and a front view showing the assembly structure of the □-shaped channel reinforcement member.

Referring to FIGS. 3 to 6, in the chassis frame assembly structure of the electrical vehicle for a disabled person according to the embodiment of the present invention, the chassis frames 10 for forming the vehicle body of the electrical vehicle for a disabled person are made of an aluminum (Al) alloy in order to reduce weight, and they commonly have a channel hollow structure having a □-shaped section.

Accordingly, the ends of the chassis frames 10 made of aluminum (Al) are welded and processed. Each of reinforcement members 30 made of metal and each configured to have a channel shape is additionally assembled with the outside of a welding assembly unit 20 and is then integrally assembled with the chassis frame 10.

In accordance with an embodiment of the present invention, the reinforcement member 30 has the channel shape so that the reinforcement member 30 is closely adhered to the outside of the aluminum frame and it surrounds the aluminum frame. The reinforcement member 30 is assembled to thereby surround the welding assembly unit 20 having a straight-line section, in the welding connection part of the chassis frame 10. The reinforcement member 30 has a □shaped channel 301 having the same sectional shape as the chassis frame 10. The reinforcement member 30 has a specific width to surround the ends of the chassis frame 10, including the welding assembly unit 20.

Furthermore, a plurality of assembly holes 31 is formed in the side of the reinforcement member 30 and is formed at specific intervals close to the welding assembly unit 20 of the chassis frame 10. The plurality of assembly holes 31 corresponds to respectively fastening holes 11.

Furthermore, fastening members 40 assembled with the respective assembly holes 31 and the respective fastening holes 11 are further included. In the embodiments of the present invention, each of the fastening members 40 is illustrated as including a fastening bolt 41 and a nut 42.

The reinforcement member 30 constructed as above according to the embodiment is positioned at the outside of the chassis frame 10 and then integrally assembled with the chassis frame 10 by the fastening members 40, thereby reinforcing the strength of the welding assembly unit 20.

Preferably, the fastening bolts 41 and the nuts 42, the fastening holes 11, and the assembly holes 31 may be assembled various forms of fastening methods. For example, the fastening holes 11 and the assembly holes 31 may have simple through holes so that the fastening bolts 41 penetrate the respective through holes and the fastening bolts 41 are then fastened by the nuts 42 on the opposite side.

Furthermore, after tap processing is performed on the fastening hole 11, only the fastening bolt 41 is inserted into the assembly hole 31 of the reinforcement member 30 and then screwed onto the fastening hole 11 of the chassis frame 10 so that the reinforcement member 30 and the chassis frame 10 are integrally assembled.

Accordingly, the fastening bolt 41 may penetrate the chassis frame and the reinforcement member 30 and the fastening bolt 41 may be then assembled by the nut 42 on the opposite side. Tap processing may be performed on the fastening hole 11, and only the fastening bolt 41 may be then screwed onto the fastening hole 11. A direction where the fastening bolt 41 is fastened may be vertical or horizontal depending on the position of the welding assembly unit 20 of the chassis frame 10 and the degree and direction of an external impact applied to the chassis frame, but not limited thereto. The direction where the fastening bolt 41 is fastened may be implemented in various ways unless it is restricted by the claims.

Meanwhile, a process of assembling the reinforcement member 30 is described below. The reinforcement member 30 is inserted into the square-sectional welding assembly unit 20 of the chassis frame 10 having a straight-line section. The reinforcement member 30 has the □-shaped channel 301, and the assembly holes 31 are formed in both faces of the reinforcement member 30.

Accordingly, the reinforcement member 30 having the □- shaped channel 301 is previously inserted into the end of the chassis frame 10 on one side before the chassis frame 10 is welded as shown in FIGS. 5 and 6, and a welding task is then completed. Next, the reinforcement member 30 is moved to the welding assembly unit 20, and the fastening bolts 41 and the nuts 42 are integrally screwed and assembled.

In accordance with the above construction, since the welding assembly unit 20 of the chassis frame 10 made of aluminum (Al) is fully surrounded by the reinforcement member 30, the strength of the welding assembly unit 20 is further reinforced. Accordingly, the welding assembly unit 20 can have strength enough to withstand an external impact.

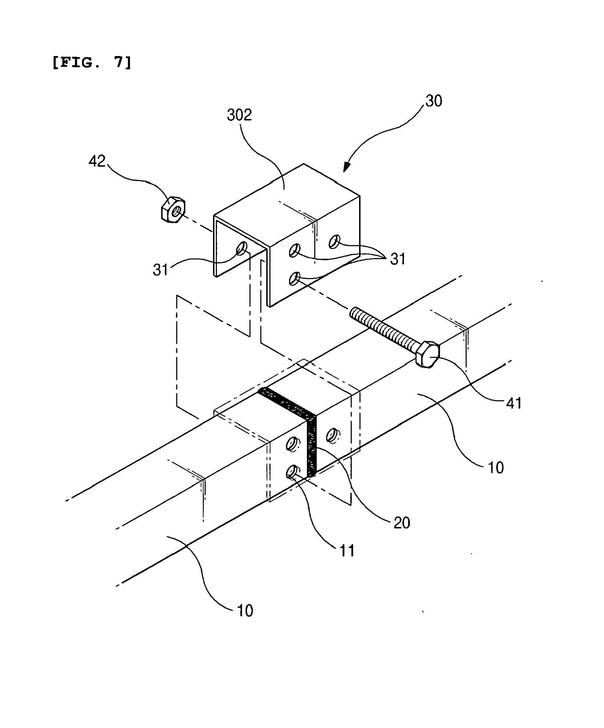

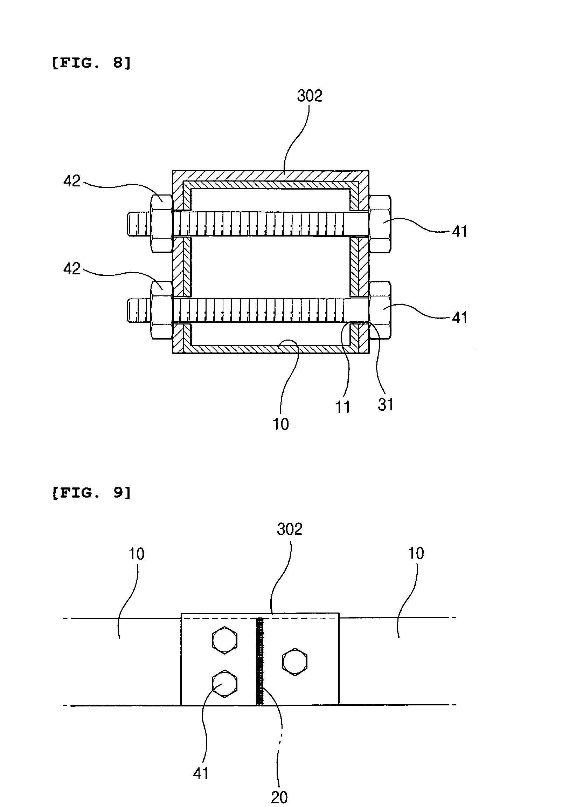

Meanwhile, FIG. 7 is an exploded perspective view showing the assembly structure of a □-shaped channel reinforcement member according to another embodiment of the present invention, FIGS. 8 and 9 are a longitudinal section view and a front view showing the assembly structure of the □-shaped channel reinforcement member.

The assembly structure of the □-shaped channel reinforcement member according to another embodiment of the present invention is described below with reference to FIGS. 7 to 9. The reinforcement member 30 is additionally assembled with the chassis frame 10 for an electrical vehicle for a disabled person. The reinforcement member 30 has a ⊏-shaped channel 302 so that the reinforcement member 30 is inserted into the square-sectional welding assembly unit 20 of the chassis frame 10 in one direction. The plurality of assembly holes 31 is formed at respective positions, corresponding to the fastening holes 11, in both faces of the reinforcement member 30.

The reinforcement member 30 including the ⊏-shaped channel 302 may be assembled like the reinforcement member 30 including the "□"-shaped channel 301 according to the above-described embodiment, thus being capable of reinforcing the welding assembly unit 20.

Furthermore, unlike the □-shaped channel reinforcement member 301, the ⊏-shaped channel reinforcement member 302 has one side opened. Thus, if the ⊏-shaped channel reinforcement members 302 are additionally reinforced for the welding assembly unit 20 in which the chassis frames 10 are welded or if the existing welding assembly unit 20 is to be reinforced by the ⊏-shaped channel reinforcement member 302 because a minute crack is generated in the surface of the existing welding assembly unit 20, the ⊏-shaped channel reinforcement member 302 may be additionally assembled in order to reinforce the welding assembly unit 20.

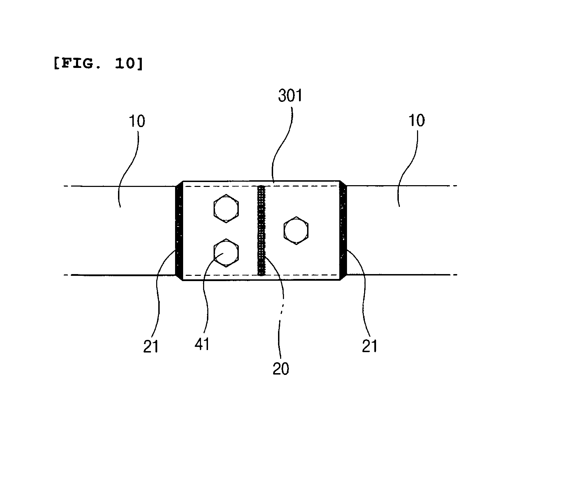

Meanwhile, in accordance with yet another embodiment of the present invention, as shown FIG. 10, the reinforcement member 30 may further include a second welding assembly unit 21 which is made of aluminum (Al) like the chassis frame 10 and is additionally welded to a corner part where the chassis frame 10 and the second welding assembly unit 21 adjoin each other in the state in which the reinforcement member 30 is assembled from the outside of the chassis frame 10 according to an assembly method, such as that described in connection with the above-described embodiment.

According to this assembly structure, both ends of the reinforcement member 30 surrounded on the outside of the welding assembly unit 20 of the chassis frame 10 and the corner part where the chassis frames 10 adjoin each other are additionally subject to welded and processed. Accordingly, the assembly parts of the chassis frames 10 can implement an assembly structure capable of maintaining further stronger strength.

In the assembly structure of the chassis frame 10 for an electrical vehicle for a disabled person according to the present invention, the reinforcement member 30 is illustrated as being made of aluminum (Al). However, the reinforcement member 30 may be made of special synthetic resin having strength enough to withstand an external impact. In particular, it is to be noted that the channel of the reinforcement member 30 may have a variety of sectional shapes corresponding to the sectional shape of the chassis frame 10, such as an ∟ shape, in addition to the □ shape or the ⊏shape within the scope of the present invention.

As described above, the chassis frame assembly structure for an electrical vehicle for a disabled person according to the embodiments of the present invention has the following advantages.

The outside of the welding assembly unit of the aluminum chassis frames is surrounded by the reinforcement member and then fastened by the fastening members, such as the bolts and the nuts. Furthermore, the reinforcement members and the chassis frames are secondarily adhered and welded, thereby forming the second welding assembly unit. Accordingly, the welding assembly part between the chassis frames can be integrated and fixed more firmly.

Accordingly, when the electrical vehicle for a disabled person collides, an impact resulting from the collision is uniformly distributed, a crack is prevented from being formed in the welding assembly unit due to the collision impact. Accordingly, there are excellent advantages in that the deformation or breakage of the chassis frame can be prevented and casualties at the time of a collision accident can be prevented.

While the present invention has been described with reference to the particular illustrative embodiments, it is not to be restricted by the embodiments but only by the appended claims. It is to be appreciated that those skilled in the art can change or modify the embodiments without departing from the scope and spirit of the present invention.

## Claims

1. A chassis frame assembly structure for an electrical vehicle for a disabled person, wherein welding assembly units 20 are formed by attachment and welding at respective portions in each of which channel-shaped frames 10 made of aluminum and each configured to have a hollow structure are coupled, the chassis frame assembly structure comprising:
a plurality of fastening holes formed at proper interval close to the welding assembly unit 20 of the chassis frames 10;
reinforcement members 30 each configured to have a channel shape, surround a periphery of the welding assembly unit 20 of the chassis frame 10, and have a plurality of assembly holes 31, corresponding to the respective fastening holes 11, formed at proper intervals in one face of the reinforcement member 30; and
fastening members 40 assembled with the assembly holes 31 and the fastening holes 11,
wherein the reinforcement member 30 is positioned at an outside of the chassis frame 10 and integrally assembled with the chassis frame 10 by the fastening members 40.

2. The chassis frame assembly structure as claimed in claim 1, wherein:
each of the reinforcement members 30 is formed of a □shaped channel 301 and is inserted into the welding assembly unit 20 having a square section, and
the assembly holes 31 are formed in both faces of the reinforcement member 30.

3. The chassis frame assembly structure as claimed in claim 1, wherein:
each of the reinforcement members 30 is formed of a ⊏shaped channel 302 and inserted into the welding assembly unit 20 having a square section, and
the assembly holes 31 are formed in both faces of the reinforcement member 30.

4. The chassis frame assembly structure as claimed in claim 1, wherein:
each of the reinforcement members 30 further comprises a second welding assembly unit 21 made of identical aluminum (Al) with the chassis frame 10, and
a corner part where the chassis frame 10 and the second welding assembly unit 21 adjoin each other is welded and processed.

5. The chassis frame assembly structure as claimed in claim 1, wherein each of the fastening members 40 includes a fastening bolt 41 and nut 42.
